# EUROPÄISCHE PATENTSCHRIFT

(11) **EP 2 483 107 B1**
(45) Veröffentlichungstag und Bekanntmachung des Hinweises auf die Patenterteilung: **12.03.2014**
(21) Anmeldenummer: 10759878.1
(22) Anmeldetag: 27.09.2010
(51) Int. Cl.: B60Q 1/48, B60R 1/00, B60R 25/10, G06T 3/40, B60Q 9/00, G06T 3/00

(54) **VERFAHREN UND VORRICHTUNG ZUR KOMBINIERTEN VISUELLEN ANZEIGE VON VIDEO- UND ABSTANDSDATEN EINER VERKEHRSSITUATION**
METHOD AND APPARATUS FOR THE COMBINED VISUAL DISPLAY OF VIDEO AND DISTANCE DATA FOR A TRAFFIC SITUATION
PROCÉDÉ ET DISPOSITIF D'AFFICHAGE VISUEL COMBINÉ DE DONNÉES VIDÉO ET DE DONNÉES DE DISTANCE D'UNE SITUATION DE CIRCULATION

(30) Priorität: 01.10.2009 DE 102009045233
(43) Veröffentlichungstag der Anmeldung: 08.08.2012
(73) Patentinhaber: Robert Bosch GmbH, 70442 Stuttgart (DE)
(72) Erfinder: SCHNEIDER, Marcus, 71642 Ludwigsburg (DE); NIEMZ, Volker, 71277 Rutesheim (DE)
(86) Internationale Anmeldenummer: PCT/EP2010/064215
(87) Internationale Veröffentlichungsnummer: WO 2011/039129

(56) Entgegenhaltungen:
- EP-A1- 1 363 237
- EP-A2- 2 058 762
- JP-A- 2001 063 500
- US-A1- 2002 171 739
- US-A1- 2008 100 614
- US-A1- 2008 224 837
- US-A1- 2009 121 851

## Beschreibung

### Stand der Technik

Zur Unterstützung von Fahrern eines Fahrzeugs ist es bekannt, Abstandssensoren am Äußeren des Fahrzeugs anzubringen und die so gewonnene Abstandsinformation entweder akustisch oder visuell dem Fahrer im Fahrzeuginnen darzustellen. Gleichermaßen ist bekannt, eine Videokamera einzusetzen, um dem Fahrer eine bessere Sicht des Fahrzeugs zu gewährleisten. Derartige Kameras zur Unterstützung des Fahrers werden beispielsweise nach hinten ausgerichtet, um die unzureichende Sicht über den Rückspiegel zu verbessern, oder werden im vorderen Teil des Fahrzeugs angebracht und nach vorne ausgerichtet, um beispielsweise bei Nachtfahrten das sich durch die Windschutzscheibe hindurchergebende Sichtbild zu verbessern. Weitere bekannte Maßnahmen, bei denen eine Kamera den Fahrer unterstützt sind Systeme, die anhand des Kamerabilds Verkehrszeichen und insbesondere den Spurverlauf erkennen, den Fahrer anzeigen oder auf mögliche Fehler hinweisen.

Zudem ist bekannt, dass sensorbasierte Abstandserkennungsmechanism (beispielsweise Ultraschall- oder Radarvorrichtungen) mit Bilddaten zu kombinieren. Ferner wird zum Hervorheben von wichtigen Objekten, die durch Formerkennung innerhalb des Videobildes erfasst wurden, durch Ersatz dieser Form mit künstlichen Objekten hervorzuheben. Ferner werden derartige künstliche Objekte wie Pfeile oder Rahmen verwendet, um innerhalb des Bildes eingeblendet zu werden. Zudem ist bekannt, die mittels Sensoren erfassten Abstandsinformationen ebenso in das Bild einzublenden, beispielsweise als numerische Werte oder als andere künstliche Objekte wie Abstandsbalken. Beispielsweise die Druckschrift DE 102 41 464 A1 zeigt ein System, in dem beispielsweise neben dem dargestellten Bild ein Anzeigenbereich vorgesehen wird, der Hinweise wiedergibt, die aus der Sensorerfassung resultieren. Weitere dort dargestellte Maßnahmen sind Hilfslinien oder Abstandsmarkierungen, die jeweils als künstliche Objekte in das Bild eingebracht werden.

Derartige kombinierte Systeme überdecken andere Bildbereiche der videoerfassten Umgebung bzw. lenken von anderen Merkmalen ab, da die künstlichen, auf die Kamerabilddaten aufgesetzten Objekte bei der Betrachtung hervorstechen bzw. darunterliegende Bildinformation überdecken. Der Nachteil von videobasierten Systemen besteht ferner darin, dass sie die volle Aufmerksamkeit des Fahrers erfordern, speziell in Situationen, in denen das Bild nur unzureichende Merkmale zum Abschätzen der Größe und Distanz enthält, und somit von der Bildinformation innerhalb des Videobildes ablenken. Auch das Einblenden von Distanzbereichen lenkt den Fahrer von der ursprünglich dargestellten Umgebung ab, da zwei unterschiedliche Klassen von Informationen (graphisch vereinfachte künstliche Objekte und Videobilddarstellungen der Umgebung) gleichzeitig dem Fahrer dargestellt sind. Gegebenenfalls zusätzlich zu verarbeitende akustische Warnungen verschärfen das Problem, dass der Fahrer von der tatsächlichen Bildinformation abgelenkt wird und sich auf zusätzliche Objekte bzw. Sensorinformation verlassen muss.

Der nächstliegende Stand der Technik ist in der US 2009/121851 A1 zu sehen.

In der Schrift US 2009/121851 A1 wird ein Verfahren zur Erzeugung eines Fahrzeugumgebungsbild aus der Vogelperspektive beschrieben, Zu diesem Zweck werden Bilder mit Hilfe von Kameras, die an verschiedenen Stellen im Fahrzeug angebracht sind aufgenommen. Ein Abstand eines Hindernisses zu dem Fahrzeug kann beispielsweise mit Hilfe von Ultraschallsensoren bestimmt werden. Aus den von der Kamera aufgenommenen Bildern wird mit Hilfe eines "view point conversion"-Prozessors das Fahrzeugumgebungsbild erzeugt, das von einem virtuellen Punkt über dem Fahrzeug gesehen wird. Das Fahrzeugumgebungsbild setzt sich dabei aus dem aufgenommenen Hintergrundbild gegebenenfalls mit Hindernis und dem Bild des Fahrzeuges zusammen, das im Bildspeicher des Fahrzeugs hinterlegt ist. Die Pixeldaten der Kamerabilder werden bei der "view point conversion" mit Hilfe einer normalen Abbildungstabelle in die Pixeldaten des Hintergrundbildes überführt. Wurde ein Hindernis erkannt, so wird eine Bildverzerrung durchgeführt. Die Bildverzerrung wird mittels einer Verzerrungsabbildungstabelle in Richtung der Achse in der das Hindernis erkannt wurde durchgeführt, aber nur auf der Seite des Hindernisses, die vom Fahrzeug abgewandt ist. Der Abstand zwischen Fahrzeug und Hindernis wird mit der normalen Abbildungstabelle in das Fahrzeugumgebungsbild transformiert.

Es ist daher eine Aufgabe der Erfindung, eine kombinierte Darstellung von Video- und Sensorabstandsdaten vorzusehen, bei der die Abstandsdaten nicht die Erfassung der realen Bilddaten durch den Fahrer überschatten.

### Offenbarung der Erfindung

Diese Aufgabe wird gelöst durch die beigefügten unabhängigen Ansprüche.

Das der Erfindung zugrunde liegende Konzept ist es, nicht Teile der Videodaten durch zusätzlichen Objekte zu überdecken, oder zusätzliche Objekte hinzuzufügen, um diese hervorzuheben, sondern die Abstandsdaten zur tatsächlichen Unterstützung der Hervorhebung von Bilddaten zu verwenden, wobei die Bildinformation vollständig beibehalten wird. Dies wird erfindungsgemäß erreicht durch Hervorheben der Bilddaten durch geometrische Transformation, d.h. durch Verzerrung. Auf diese Weise werden die Bilddaten nicht überschattet; insbesondere werden keine zusätzlichen Objekte auf. in der Nähe des entsprechenden Bildbereichs eingeblendet, die die Erfassung des realen Kamerabildes beeinträchtigen würden.

Dies erhöht die intuitive Erfassbarkeit des Bildinhalts, insbesondere deshalb, da keine zusätzlichen, künstlichen Objekte auf die Kamerabilddaten überlagern. Erfindungsgemäß wird der Kamerabildinhalt geometrisch angepasst, wobei die Anpassung durch eine geometrische Transformation ausgeführt wird, deren Stärke von den sensorbasierten Abstandsdaten abhängt. Bei der erfindungsgemäßen geometrischen Anpassung werden die Kamerabilddaten nur in ihren Proportionen, in ihrer Bildgröße oder Orientierung geändert, bleiben jedoch vollständig erhalten. Insbesondere werden die Bilddaten weder überdeckt noch derart mit Objekten beaufschlagt, dass der Beobachter von den ursprünglichen realen Bilddaten abgelenkt wird oder die Erkennung von Bildmerkmalen durch Verdecken verhindert wird.

Erfindungsgemäß wird daher ein Verfahren zur kombinierten visuellen Anzeige von Video- und Abstandsdaten einer Verkehrssituation vorgesehen, in der sich ein Fahrzeug befindet. Die Video- und Abstandsdaten sind Daten, die von dem Fahrzeug aus erfasst wurden, insbesondere die Kamera zur Erfassung der Videodaten und die Sensoren zur Erfassung der Abstandsdaten sind an oder im Fahrzeug angebracht. Die Videokamera kann innerhalb der Fahrgastzelle oder auch außerhalb vorgesehen sein und Bilddaten aus der Perspektive eines an oder im Fahrzeug befindlichen Punkts darstellen. Die Sensoren sind vorzugsweise an einer Außenseite des Fahrzeugs angeordnet, so dass die dadurch vorgesehenen Sensordaten einen Abstand relativ zu einer Fahrzeugaußenseite feststellen. Sensoren können Ultraschall- oder Radar- bzw. MikrowellenSender/Empfangs-Kombinationen verwendet werden, entweder als einzelner Sensor oder vorzugsweise als Sensorarray, das beispielsweise entlang einer oder beider Stoßstangen erstreckt oder sich entlang der Seite des Fahrzeugs erstreckt. Die Abstandsdaten werden beispielsweise gewonnen durch Laufzeitmessungen eines abgesendeten Ultraschall- oder Radarsignals oder ähnliches. Die Verkehrssituation wird durch Objekte gebildet, die sich in der Nähe des Fahrzeugs befinden, beispielsweise andere Fahrzeuge, die mittels Sensor und Video erfasst werden können. Neben Fahrzeugen können auch feststehende Objekte wie Poller oder andere Verkehrsmaßnahmen, oder auch Gebäudewände betrachtet werden. Das erfindungsgemäße Verfahren umfasst ferner den Schritt des Aufnehmens von Kamerabilddaten eines Umgebungsabschnitts vom Fahrzeug aus. Hierbei wird von der Perspektive des Fahrzeugs, beispielsweise ausgehend von einem Punkt innerhalb der Fahrgastzelle an der Windschutzscheibe oder auch am hinteren Ende des Fahrzeugs Bilddaten erfasst, beispielsweise als Videodaten oder zeitlich aufeinanderfolgende Standbilddaten, wobei der Umgebungsabschnitt dem Erfassungswinkel der Kamera entspricht. Hierbei wird die Verkehrssituation, wie sie sich innerhalb des Umgebungsabschnitts darstellt, von der Kamera gemäß des Erfassungswinkels der Kameras aufgenommen. Ferner werden zeitgleich oder zumindest zeitnah zum Aufnehmen von Kamerabilddaten Entfernungsdaten erfasst, die mindestens einen Abstand zwischen dem Fahrzeug und ein Objekt innerhalb des Umgebungsabschnitts wiedergeben. Vorzugsweise wird für jedes innerhalb des Umgebungsabschnitts vorliegenden Objekts der Abstand erfasst. Für den Fall, dass der Umgebungsabschnitt Unterabschnitte oder Stellen aufweist, die mittels der Abstandssensoren nicht erfasst werden kann, den Abstand zwischen dem Fahrzeug und mindestens einem Objekt innerhalb der Reichweite des Sensors wiedergeben, wobei der Bereich, der sich durch die Reichweite der Sensoren ergibt, mit dem Umgebungsabschnitt überlappt. Daher werden Entfernungsdaten von Objekten erfasst, die sowohl innerhalb der Reichweite einer Abstandssensorvorrichtung liegen, mit denen die Entfernungsdaten erfasst werden, als auch innerhalb des Umgebungsabschnitts liegen, der von den Kamerabilddaten wiedergegeben wird. Ein Objekt, das zwar innerhalb des Umgebungsabschnitts der Kamerabilddaten liegt, jedoch außerhalb der Reichweite der Sensoren zur Abstandsmessung, dann kann diesem Objekt ein Abstand zugeordnet werden, der mindestens so groß wie die Reichweite der Abstandssensoren ist, so dass das Erfassen von Entfernungsdaten auch Objekte außerhalb der Sensorerfassung berücksichtigen kann, sie jedoch innerhalb der Kamerabilddaten bzw. des von der Kamera erfassten Umgebungsabschnitts liegen.

Erfindungsgemäß wird zumindest ein Bildabschnitt der Kamerabilddaten verzerrt abhängig von dem mindestens einen erfassten Abstand. Die Abhängigkeit wird gebildet durch eine Funktion der Stärke der Verzerrung zu dem Abstand. Die Funktion, welche den Abstand auf die Verzerrungsstärke abbildet, ist vorzugsweise eine monoton fallende Funktion, wodurch bei einem größeren Abstand weniger verzerrt wird als im Vergleich zu einem kleineren Abstand. Dies ist insbesondere der Fall, wenn die Verzerrung als Vergrößerung (Vergrößerungsfaktor >1) vorgesehen wird. Wird als Verzerrung eine Verkleinerung gewählt (Bildgrößenmultiplikationsfaktor <1), dann wird die Abhängigkeit als monoton steigende Funktion angegeben, wodurch Bildabschnitte bei größeren Abständen auch stärker verkleinert werden (d.h. verzerrt werden) als bei kleineren Abständen. Da Verkleinerungen und Vergrößerungen als Verzerrungsoperationen bis auf ein Vorzeichen einander entsprechen, wird im Weiteren vornehmlich eine Streckung betrachtet in vertikaler Richtung, horizontaler Richtung oder in beide Richtungen.

Erfindungsgemäss umfasst das Verzerren Verzerrungsoperationen wie Verschieben, Strecken, Stauchen, Drehen, oder eine beliebige Kombination hiervon. Hierbei ist zu bemerken, dass die Operation Stauchen bis auf das Vorzeichen der Operation Strecken entspricht. Die Operationen beziehen sich auf Transformationen ausgehend von einem empfangenen Kamerabild, das als unverzerrt betrachtet werden kann. Neben den genannten Verzerrungsoperationen können auch andere oder komplexere Verzerrungsoperationen durchgeführt werden, beispielsweise eine Transformation, bei der die Mitte des entsprechenden Bildabschnitts nach der Transformation in ihrer Fläche zunimmt, im Vergleich zu Randabschnitten. Die Verzerrungsoperation (bzw. deren Kombination wird auf einen Bildabschnitt angewandt, der dem gesamten Umgebungsabschnitt entsprechen kann, der von der Kamera aufgenommen wird, oder der ein Teil des Bildes ist, das die Kamerabilddaten wiedergeben. Der Bildabschnitt entspricht somit entweder dem gesamten von der Kamera aufgenommenen Bild, einem Teilabschnitt, wobei sich die Verzerrungsoperation jedoch auch auf mehrere Bildabschnitte beziehen können, die jeweils einem Teilabschnitt der gesamten Kamerabilddaten entsprechen. Wenn mehrere Bildabschnitte vorgesehen sind, so schließen sich diese vorzugsweise direkt aneinander an oder überlappen sich nur teilweise, und füllen insgesamt das gesamte Bild aus, welches von den Kamerabilddaten wiedergegeben wird. Die Verzerrungsoperation wird mit einer Stärke ausgeführt, die gemäß einer monoton fallenden Funktion von dem Abstand abhängt. Dies bezieht sich insbesondere auf eine Verschiebung, Streckung oder Drehung. Dadurch wird bei einem geringeren Abstand die Verzerrungsoperation mit einer größeren Stärke ausgeführt als bei einem großen Abstand. Alternativ kann auch eine monoton steigende Funktion verwendet werden, wobei sich diese insbesondere auf die Verzerrungsoperation Stauchen bezieht, um weiter entfernt gelegene Bildabschnitte stärker zu stauchen (d.h. zu verkleinern) als Bildabschnitte mit einem geringen Abstand. Bei der Verzerrungsoperation Strecken entspricht die Stärke dem Vergrößerungsfaktor (>1), bei der Verzerrungsoperation Drehen entspricht die Stärke dem Drehwinkel (gegenüber dem Ursprungsbild), und bei der Verzerrungsoperation Verschieben entspricht die Stärke der Verschiebungsdistanz gegenüber dem Ursprungsbild (und auch gegenüber anderer, weniger verzerrter Bildabschnitte). Bei der Verzerrungsoperation Stauchen entspricht die Stärke dem Breiten-zu-Längenverhältnis oder dem Kehrwert hiervon. Weitere Verzerrungsoperationen sind Vergrößern, Verkleinern und allgemein Skalieren, wobei, wenn die Verzerrungsoperation einer Verkleinerung entspricht, die Funktion eine monoton steigende Funktion ist. Bei mehreren Bildabschnitten werden diese vorzugsweise der gleichen Verzerrungsoperation - wenn auch gegebenenfalls mit verschiedenen Stärken - unterzogen. Alternativ kann für Randbereiche eine andere Verzerrungsoperation gewählt werden als für mittlere Abschnitte des Bildes der Kamerabilddaten.

Gemäß einer weiteren Ausführung der Erfindung werden Abstandsdaten jeweils für mehrere, unterschiedliche Bereiche des Umgebungsabschnitts erfasst. Dies wird vorgesehen durch Entfernungssensoren bzw. Abstandssensoren, die einem Fahrzeugabschnitt aufgereiht sind (beispielsweise horizontal, mit gleichem Abstand zueinander und einer Außenseite des Fahrzeugs, insbesondere am Heckstoßfänger). Die Bereiche entsprechen den jeweiligen Sensorbereichen der einzelnen Sensoren, die durch die Reichweite und Empfangscharakteristik der Sensoren definiert sind. Die einzelnen unterschiedlichen Bereiche des Umgebungsabschnitts überlappen sich vorzugsweise teilweise und erstrecken sich aneinandergereiht über vorzugsweise die gesamte Breite des Umgebungsabschnitts. In gleicher Weise sind hierbei die Kamerabilddaten in mehrere, unterschiedliche Bildabschnitte eingeteilt, so dass der zumindest eine Bildabschnitt mehrere, unterschiedliche Bildabschnitte umfasst. Diese können sich zumindest teilweise überlappen, insgesamt vollständig das gesamte Kamerabild umgreifen und sind vorzugsweise unmittelbar aneinander gereiht. Insbesondere können die mehreren Bildabschnitte vertikale Streifen sein, die unmittelbar aneinander grenzen und so das gesamte von der Kamera erfasste Bild abdecken. Der Schritt des Verzerrens umfasst das Verzerren mindestens eines der mehreren Bildabschnitte gemäß der Abstandsdaten, die ein Objekt betreffen, das in dem Bereich des Umgebungsabschnitts vorliegt, der diesem Bildabschnitt im Wesentlichen entspricht oder sich mit diesem größtenteils überlappt. Vorzugsweise werden alle oder zumindest einige der Bildabschnitte verzerrt, jeweils gemäß der Stärke, die für den einzelnen Bildabschnitt geeignet ist. Als geeignete Stärke wird der Abstand angesehen, der für den einzelnen Bildabschnitt erfasst wurde. Die einzelnen Bildabschnitte und die zugehörigen Bereiche des Umgebungsabschnitts, die durch den Empfindlichkeitsbereich der Sensoren vorgegeben sind, müssen nicht notwendigerweise identisch sein, sondern können sich auch zumindest teilweise überlappen. Insbesondere kann ein von dem Sensor überwachter Umgebungsabschnitt vollständig innerhalb des zugehörigen Bildabschnitts liegen (oder auch nur teilweise), ohne diesen jedoch vollständig auszufüllen. Grundsätzlich ist eine Zuordnung zwischen Sensor und zugehörigem einzelnen Bildabschnitt wünschenswert, wenn eine Mehrzahl von Sensoren verwendet wird. Eine hundertprozentige Entsprechung des Empfindlichkeitsbereichs des Sensors und des zugehörigen Abschnitts des Kamerabildes ist nicht notwendigerweise erforderlich.

Gemäß einer weiteren Ausführungsform, die insbesondere mit der voranbeschriebenen Ausführungsform kombiniert werden kann, werden für mindestens zwei der unterschiedlichen Bereiche des Umgebungsabschnitts (die sich aus der Reichweite und der Regelcharakteristik der einzelnen Sensoren ergeben) jeweils zugehörige Abstandsdaten erfasst (durch den jeweiligen zugehörigen Sensor). Gleichermaßen werden hierzu erfasst mindestens zwei der mehreren Bildabschnitte, jeweils gemäß der Abstandsdaten für mindestens ein Objekt, das in dem jeweiligen Bildabschnitt vorliegt. Die mindestens zwei oder mehreren Bildabschnitte werden jeweils gemäß den zugehörigen Abstandsdaten für mindestens ein Objekt, das in dem entsprechenden Bildabschnitt bzw. Bereich des Umgebungsabschnitts vorliegt, verzerrt. Insbesondere werden mindestens zwei der mehreren Bildabschnitte gemäß der Abstandsdaten für mindestens ein Objekt verzerrt, das in dem jeweiligen Bereich des Umgebungsabschnitts vorliegt, wobei der Bereich dem entsprechenden Bildabschnitt zugeordnet ist, im Wesentlichen diesem entspricht oder sich mit diesem größtenteils überlappt.

Gemäß einer weiteren Ausführungsform ist der Umgebungsabschnitt in sich aneinander anschließende Bildabschnitte entlang der Horizontalen der Kamerabilddaten unterteilt. Vorzugsweise schließen sich die Bildabschnitte unmittelbar aneinander an oder überlappen sich nur geringfügig. Als Horizontale der Kamerabilddaten wird die Horizontale bezeichnet, die sich durch Orientierung der Kamera zu dem Untergrund des Fahrzeugs bzw. aus der Stellung des Fahrzeugs selbst ergibt. Als Horizontale wird beispielsweise eine Gerade innerhalb einer Ebene bezeichnet, die senkrecht zur Gravitationsrichtung ist, oder eine Gerade bezeichnet, die innerhalb einer Ebene ist, in der sich die Stellen des Fahrzeugs befinden, mit denen das Fahrzeug den Untergrund berührt. Die jeweiligen Bildabschnitte werden gemäß den jeweils zugeordneten Entfernungsdaten verzerrt. Die verzerrten, benachbarten Bildabschnitte können gemäß ihrer Verzerrung, die gemäß dem einzelnen Abstand vorgesehen wird, dargestellt werden. Verzerrte, benachbarte Bildabschnitte werden entweder nicht aneinander angeglichen, oder die Verzerrung dieser verzerrten, benachbarten Bildabschnitte wird zumindest an Randbereichen der Bildabschnitte für die benachbarten Bildabschnitte angeglichen, wobei an den Schnittstellenbereichen (vertikal) der Bildabschnitte Verzerrungen einer Stärke vorgesehen werden, die am Übergang zwischen zwei benachbarten Bildabschnitten kontinuierlich verläuft. Damit werden Randabschnitte benachbarter Bildabschnitte in der Stärke der Verzerrung aneinander angepasst, um abrupte Verzerrungsänderungen benachbarter Bildabschnitte zu vermeiden. Der so vorgesehene Abgleich von verschiedenen Verzerrungsstärken zwischen zwei benachbarten Bildabschnitten kann beispielsweise linear verlaufen, wobei in den Randabschnitten die Verzerrungsstärke mit zunehmender Nähe zum benachbarten Bildabschnitt der Verzerrung des benachbarten Bildabschnitts angenähert wird. Neben linearen Interpolationsverfahren zur Angleichung können auch komplexere, polynomiale Anpassungen oder auch mehrere Stützpunkte verwendet werden.

Neben der Verzerrung der Kamerabilddaten selbst kann auch die Farbinformation verändert werden. Hierbei sieht das Verfahren vor, Farbinformation zumindest eines Bildabschnitts der Kamerabilddaten abhängig von dem mindestens einem Abstand zu ändern, wobei mit abnehmendem Abstand die Farbinformation zunehmend gegenüber der ursprünglichen Farbinformation verändert wird. Die Änderung kann sich an einer vorgegebenen Farbänderung orientieren, wobei zunächst bei einer geringen Änderung bei großen erfassten Abständen im Wesentlichen der ursprüngliche Farbton dargestellt wird und mit abnehmendem Abstand die Farbinformation zunehmend zunächst Gelb- und dann Rot-Anteile erhält. Insbesondere können die Rot-Anteile erhöht werden, je geringer der erfasste Abstand ist. Die Abhängigkeit der Farbinformation vom Abstand entspricht somit der Verzerrungsstärke, wie sie oben beschrieben wurde. Je geringer der erfasste Abstand, desto größer die Änderung (entsprechend desto größer die Stärke der Verzerrung), wobei die Änderung bei großen Abständen (geringen Verzerrungen) der ursprünglichen Farbinformation des aufgenommenen Bildes entspricht, und mit zunehmendem Verzerrungsgrad (d.h. mit sich verringerndem Abstand) die Farbinformation mehr und mehr geändert wird, vorzugsweise durch zunehmende Betonung bzw. zunehmende Verstärkung von Warnfarbtönen wie gelb und, für zusätzlich verstärkte Betonung, Rot-Farbtöne. Die Änderung der Farbinformation betrifft einen Bildabschnitt, vorzugsweise einen Bildabschnitt von mehreren Bildabschnitten, beispielsweise ein Unterabschnitt des Bildabschnitts, wobei der Unterabschnitt das Objekt darstellt, auf den sich der Abstand bezieht. Insbesondere kann die Umgebung des Objekts, das Objekt selbst oder das Objekt inklusive seiner Umgebung innerhalb des Bildes gemäß dem erfindungsgemäßen Verfahren geändert werden. Als Umgebung wird hierbei ein Randstreifen bezeichnet, der das Objekt mittelbar oder unmittelbar umgibt und beispielsweise eine konstante Breite aufweist. Daher wird alternativ der Objektbereich selbst erfindungsgemäß in seiner Farbinformation, abhängig vom erfassten zugehörigen Abstand, geändert.

Eine besonders bevorzugte Ausführungsform der Erfindung sieht vor, dass das Verzerren vorgesehen wird durch Vergrößern eines Bildabschnitts mit abnehmendem Abstand eines Objekts, das innerhalb des Bildabschnitts erfasst wurde, nur in vertikaler Richtung, nur in horizontaler Richtung oder in beiden Richtungen (beispielsweise mit gleichen oder unterschiedlichen Verzerrungsfaktoren in horizontaler bzw. vertikaler Richtung). Alternativ oder in Kombination hierzu kann ein Bildabschnitt auch verkleinert werden, wenn innerhalb des Bildabschnitts kein Objekt erfasst wird, oder mit zunehmendem Abstand eines Objekts eine zunehmende Verkleinerung des Bildabschnitts vorgesehen wird, wobei das Objekt innerhalb des Bildabschnitts erfasst wurde. Die Verkleinerung findet nur in vertikaler Richtung, nur in horizontaler Richtung oder in beiden Richtungen der Kamerabilddaten statt. Bei Verkleinerung in horizontaler und vertikaler Richtung kann sich der Verkleinerungsfaktor für die beiden Richtungen unterscheiden.

Gemäß einer welteren bevorzugten Ausführungsform umfasst das Verzerren der Kamerabilddaten bzw. des zumindest einen Bildabschnitts das Vorsehen, das heißt Hinzufügen eines unteren Rands zwischen einer Bildunterkante der Kamerabilddaten und der untersten Kante der visuellen Darstellung, die die Kamerabilddaten und darunterliegend den unteren Rand wiedergibt. Die ursprünglichen Kamerabilddaten werden daher dahingehend verzerrt, dass sich ein Bild (visuelle Darstellung ergibt, das sowohl die ursprünglichen Kamerabilddaten als auch den zusätzlichen Rand wiedergibt, wobei die Kamerabilddaten beispielsweise verkleinert werden können, um Platz für den zusätzlichen Rand zu schaffen. Die Verkleinerung kann insbesondere als Stauchung vorgesehen werden.

Der untere Rand, der in der visuellen Darstellung (innerhalb des ausgegebenen Bildes) hinzugefügt wird, weist eine Höhe auf, die mit dem Abstand zunimmt, der für ein Objekt erfasst wird, das in dem Bildabschnitt liegt, der über dem Rand dargestellt wird. Wenn daher in dem Bildabschnitt über dem Rand ein Objekt dargestellt ist, für das ein großer Abschnitt ermittelt wurde, so wird ein Rand mit einer großen Höhe vorgesehen, und bei einem Bildabschnitt mit einem Objekt, für das ein geringer Abstand ermittelt wurde, wird der unterer Rand mit einer geringen Höhe vorgesehen. Dies ist insbesondere mit den hier beschriebenen Ausführungsformen kombinierbar, bei denen mehrere Bildabschnitte nebeneinander dargestellt werden, die unterschiedlichen Sensoren und somit unterschiedlichen Abständen zugeordnet sind. Der Rand weist in diesem Fall nicht für alle Bildabschnitte die gleiche Höhe auf, wenn für die verschiedenen Bildabschnitte unterschiedliche Abstände erfasst werden, sondern richtet sich in seinem Verlauf (durch die Höhe bestimmt) nach den einzelnen Abständen, die für die einzelnen über dem entsprechenden Randabschnitt liegenden Bildabschnitte erfasst wurden. Innerhalb des Rands werden vorzugsweise keine Kamerabilddaten als Abbildung von Kamerabilddaten wiedergegeben. Gegebenenfalls können Zusatzinformationen innerhalb des Rands dargestellt sein. Als Kombination mit einer oben beschriebenen Ausführungsform kann der Rand mit einer Farbinformation vorgesehen sein, der die Nähe eines Objekts widerspiegelt, wobei bei nahen Objekten (geringer Abstand) der entsprechende Farbton des entsprechenden Randabschnitts mehr Gelb- bzw. Rottöne enthält (oder andere Wamfarbtöne), als bei erfassten großen Abständen.

Daher umfasst das Verzerren insbesondere das Verzerren eines unteren Rands zwischen einer Bildunterkante der Kamerabilddaten und der untersten Kante der visuellen Anstellung (die zusammen das Gesamtbild vorsehen), wobei die Darstellung die Kamerabilddaten und den darunterliegenden unteren Rand wiedergibt. Hierbei weist der untere Rand eine Farbe auf (entweder der gesamte Rand oder einzelne Abschnitte hiervon, die unter den entsprechenden Bildabschnitten vorgesehen sind), die sich gemäß einem vorbestimmten Verlauf, mit dem Abstand ändert, der für ein Objekt in dem über dem Rand dargestellten Bildabschnitt erfasst wird. Der untere Rand gibt diese Farbe wieder. Insbesondere gibt der untere Rand keine Kamerabilddaten in Form einer Abbildung der Kamerabilddaten wieder. Aus den Kamerabilddaten abgeleitete Daten können als graphische oder numerische Information in dem Rand vorgesehen sein, wobei jedoch vorzugsweise Bilddaten des Kamerabilds selbst nicht im unteren Rand vorhanden sind.

Das der Erfindung zugrunde liegende Konzept wird ferner realisiert durch eine Vorrichtung zur kombinierten visuellen Anzeige von Video- und Abstandsdaten zur Ausführung des erfindungsgemäßen Verfahrens. Die Vorrichtung umfasst einen Bildeingang eingerichtet zur Eingabe der Kamerabilddaten und zum Weiterleiten dieser Kamerabilddaten an eine Bildmanipulationseinheit, die als Teil der Vorrichtung vorgesehen ist. Hierzu ist der Bildeingang mit der Bildmanipulationseinheit verbunden. Ferner umfasst die Vorrichtung einen Abstandseingang zur Eingabe von Abstandsinformationen. Während an den Bildeingang eine Fahrzeugkamera angeschlossen werden kann, kann an den Abstandseingang eine Einrichtung angeschlossen werden, die mit Abstandssensoren in Verbindung steht und Abstandsdaten ermittelt. Alternativ kann der Abstandseingang unmittelbar mit den Sensoren verbunden sein, wobei in diesem Fall die Vorrichtung die Ermittlung der einzelnen Abstände vornimmt. In beiden Fällen ist der Abstandseingang zur Eingabe von Abstandsinformation eingerichtet, wobei die Abstandsinformation den erfassten Abstand wiedergibt. Die Bildmanipulationseinheit ist mit dem Abstandseingang verbunden, um Abstandsinformation zu erhalten. Die Vorrichtung umfasst ferner einen Ausgang, der mit der Bildmanipulationseinheit verbunden ist und zur Ausgabe von Bildanzeigedaten eingerichtet ist. Die Bildanzeigedaten geben den verzerrten Bildabschnitt wieder, der Resultat des Verzerrungsschritts ist, welcher von der Bildmanipulationseinheit vorgesehen wird. Insbesondere ist die Bildmanipulationseinheit eingerichtet, den Schritt des Verzerrens an den Kamerabilddaten auszuführen, die am Bildeingang anliegen. Die Bildmanipulationseinheit ist somit zur erfindungsgemäßen geometrischen Transformation von Bilddaten eingerichtet, insbesondere zur Ausführung mindestens einer der oben genannten Verzerrungsoperationen. Hierbei wird von der Bildmanipulationseinheit die Verzerrung ausgeführt in Abhängigkeit von Abstandsinformation, die am Abstandseingang anliegt. Vorzugsweise ist die Bildmanipulationseinheit eingerichtet, die Kamerabilddaten bildabschnittsweise zu verzerren, wobei jeder Bildabschnitt eine zugeordnete Abstandsinformation aufweist, die den Grad der Verzerrung individuell für jeden Bildabschnitt vorsieht. Hierzu kann die Bildmanipulationseinheit eine Unterteilungseinrichtung umfassen, um aus den gesamten Bildinformationen der Kamerabilddaten einzelne Bildabschnitte vorzusehen, die jeweils einzeln gemäß individueller Abstandsinformation verzerrt werden. Die Abstandsinformation kann somit im Sinne eines Vektors vorgesehen sein, wobei jeder Vektoreintrag einem einzelnen Abstandssensor eindeutig zugeordnet ist.

Schließlich ist die erfindungsgemäße Vorrichtung eingerichtet, den verzerrten, zumindest einen Bildabschnitt am Ausgang auszugeben. Insbesondere ist die Vorrichtung eingerichtet, bei der Verwendung von mehreren Bildabschnitten ein zusammengesetztes erzeugtes Bild am Ausgang auszugeben, insbesondere Bilddaten einer zusammengesetzten visuellen Darstellung aller Bildabschnitte und gegebenenfalls einschließlich eines Rands, der erfindungsgemäß dem Bild hinzugefügt wird. In Kombination oder anstatt der geometrischen Transformationen ist die Vorrichtung, insbesondere die Bildmanipulationseinheit, eingerichtet, die Farbinformation der Kamerabilddaten wie oben beschrieben gemäß Abstandsinformation zu ändern.

Gemäß einer weiteren Ausführungsform kann die Vorrichtung ferner eine Anzeigeeinheit in Form eines Bildschirms umfassen. Die Umsetzung der erfindungsgemäßen Vorrichtung kann vorgesehen werden mittels Software, die zumindest einige der Funktionen realisiert, und die zusammen mit einem Prozessor die Vorrichtung sowie das Verfahren implementiert. Weitere Ausführungen der Erfindung können programmierbare oder nicht programmierbare Schaltungen umfassen, die aus Echodaten von Sensoren Abstandsinformationen berechnen. Im Falle der Umsetzung mittels einer Prozessorvorrichtung kann diese auch zur Ausführung weiterer Funktionen des Fahrzeugs verwendet werden. Da die Bildmanipulation im Wesentlichen auf Verzerrung oder Änderung von Farbinformationen beruht, können übliche Prozessoren bei einer Bildauflösung von 400 x 300 Pixel mit einer Taktfrequenz von weniger als 40 MHz verwendet werden, da die erfindungsgemäße Vorrichtung eine Rechenleistung von üblichen Prozessoren erfordert, die einer Taktfrequenz von 22-36 MHz entsprechen. Daher kann die erfindungsgemäße Vorrichtung mit bereits im Fahrzeug vorgesehenen Media-Steuergeräten vorgesehen werden (beispielsweise Navi, Zentral-Display,...), die bei Taktfrequenzen von 80 MHz- 200 MHz arbeiten und somit ausreichend Rechenleistung zur Aufnahme der erfindungsgemäßen Funktionen bieten. Die Umsetzung kann mittels programmierbarer Schaltungen wie ASICs oder FPGAs vorgesehen werden, insbesondere mittels für Videoanwendungen spezialisierte Prozessoren oder Prozessoren, die bei der Umsetzung von Parkhilfesystemen verwendet werden.

Kurze Beschreibung der Zeichnungen
- Fig. 1: zeigt ein Scenario zur Erläuterung des erfindungsgemäßen Verfahrens;
- Fig. 2a und 2b: zeigen beispielhafte Kamerabilddaten gemäß Aufnahme (Fig. 2a) und nach Verzerrung (Fig. 2b);
- Fig. 3a: zeigt einen beispielhaften Verzerrungsverlauf; und
- Fig. 3b: zeigt dazugehörige beispielhafte Entfernungsdaten.

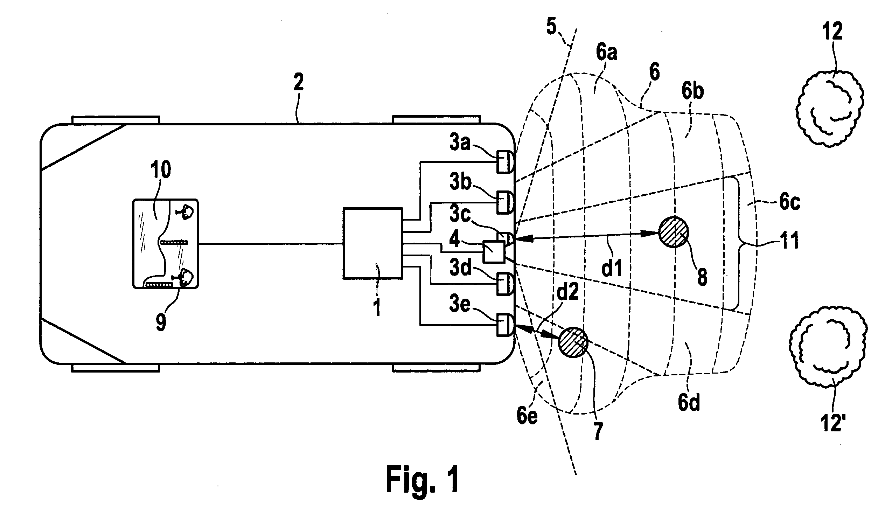

Das in Fig. 1 dargestellte Scenario zeigt eine erfindungsgemäße Vorrichtung 1 innerhalb eines Fahrzeugs 2, an dem eine Vielzahl von Sensoren 3a', 3e angeordnet sind. Ferner ist eine Kamera 4 am Fahrzeug 2 angeordnet. Die Kamera 4 nimmt einen Umgebungsabschnitt auf, der sich durch den Aufnahmewinkel 5 der Kamera 4 definiert. Der Umgebungsabschnitt 5 bildet das gesamte Bild bzw. den Bildabschnitt der Kamera. In gleicher Weise erfassen die Sensoren mehrere unterschiedliche Bereiche 6a', 6e des Umgebungsabschnitts, wobei jedem Sensor 3a', 3e ein Bereich 6a', 6e zugeordnet ist. Die in Fig. 1 dargestellten unterschiedlichen Bereiche 6a', 6e sind der einfacheren Darstellung wegen durch einen einzelnen Strich getrennt. Bei realen Umsetzungen überlappen sich die einzelnen verschiedenen Bereiche jedoch teilweise an ihren benachbarten Rändern, wobei bei einer Überlappung für den überlappenden Bereich eine Interpolation der entsprechenden Abstandsdaten vorgenommen wird.

In dem Umgebungsabschnitt befinden sich ferner Objekte 7, 8, beispielsweise Pfosten, sowie weitere Objekte 12, 12', beispielsweise in Form von Bäumen. Während die Objekte 7, 8 innerhalb der Bereiche des Umgebungsabschnitts liegen, die von den Sensoren 3a', 3e erfassten werden können, liegen die Objekte 12, 12' außerhalb der Reichweite der Sensoren, sind jedoch noch innerhalb des Umgebungsabschnitts angeordnet, der von der Kamera erfasst werden kann.

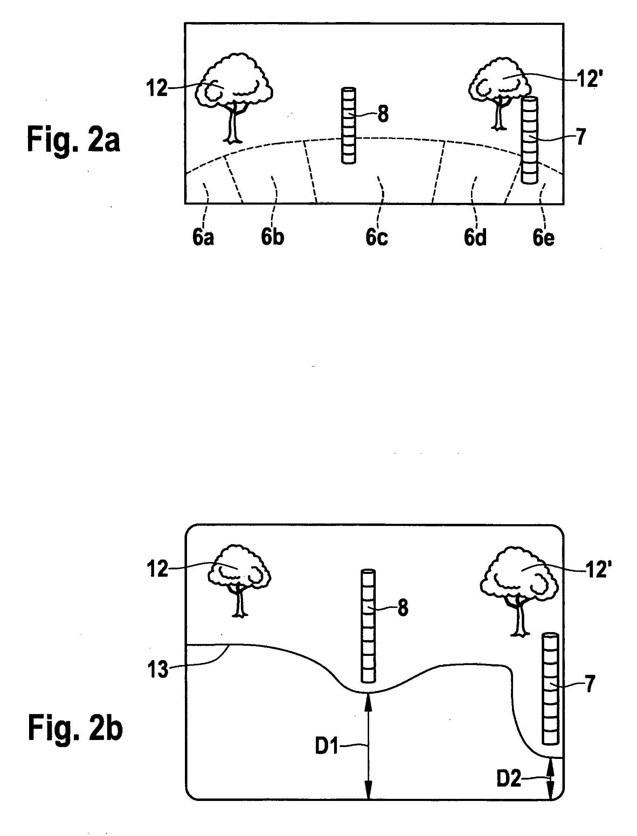

Die einzelnen Bereiche des Umgebungsabschnitts, die von den Sensoren 3a', 3e erfasst werden, weisen jeweils einen Öffnungswinkel auf, der beispielhaft für Sensor 3c mit dem Bezugszeichen 11 dargestellt ist. In diesem Öffnungswinkel, der auch den Bereich 6c definiert, liegt das Objekt 8. Das Objekt 8 ist um einen Abstand d1 von dem Fahrzeug 10 entfernt, und das Objekt 7 ist um einen Abstand d2 von dem Fahrzeug 10 entfernt. Ferner wird von den Sensoren erfasst, dass das Objekt 8 im Bereich 6c des zugehörigen Sensors 3c vorliegt, und das Objekt 7 im Bereich 6e des Sensors 3e vorliegt. In dem Fahrzeug 2 ist ferner ein Bildschirm 9 angeordnet, auf dem ein erfindungsgemäß erzeugtes Videobild 10 dargestellt wird. Das in Fig. 1 dargestellte Bild ist lediglich beispielhaft, nähere Erläuterungen ergeben sich aus den Fig. 2a und 2b.

Wie sich aus Fig. 1 ergibt, wird die Abstandsinformation d1, d2 vorzugsweise mit einer Richtungsinformation oder mit einer Ortsinformation kombiniert, mit der sich der Aufenthaltsort der Objekte 7, 8 feststellen lässt, um diese einem Bereich 6a, 6c des Umgebungsabschnitts 6 zuzuordnen. Der Ort bzw. der Winkel kann beispielsweise mittels Trilateration erfasst werden, vorzugsweise von der Vorrichtung 1. Aus der Fig. 1 ist ferner ersichtlich, dass der auch als Detektionsfeld zu bezeichnende Umgebungsabschnitt 6 in seiner Gesamtheit in Richtungszonen mit definierten Öffnungswinkeln 11 unterteilt ist, um eine Zuordnung zwischen per Sensor detektiertem Objekt 7, 8 und zugehörigem Bildabschnitt bzw. Objektabschnitt der Kamerabilddaten zuzuordnen. Zudem ist der Fig. 1 zu entnehmen, dass sich die Erfindung zur geeigneten unterstützten Darstellung von Objekten 7, 8, 12, 12' dient, die entweder innerhalb des Detektionsbereichs 6 der Ultraschallsensoren 3a', 3e liegen und gleichzeitig von der Kamera 4 erfasst werden können, vgl. Objekte 7, 8, oder die Objekte außerhalb des Detektionsbereichs 6 umfassen, die nur von der Kamera 4, nicht jedoch von den Sensoren 3a', 3e umfasst werden können. Liegen die Objekte außerhalb des Detektionsbereichs, das heißt außerhalb der von den Sensoren 3a', 3e erfassbaren unterschiedlichen Bereiche des Umgebungsabschnitts 6a', 6e, dann liegen für diese Objekte keine Abschnittsinformationen vor, die mit den Bilddaten gemäß der Erfindung kombiniert werden können. Die Bilddaten der Kamera 4 werden an die Vorrichtung 1 weitergegeben, welche diese Daten geometrisch manipuliert, um sie an der Anzeige 9 auszugeben, wobei mindestens einer der Bereiche, die von den Sensoren erfasst werden können, ein Objekt vorliegen sollte, um entsprechende Abschnittsinformationen zu erfassen und die erfindungsgemäße Verzerrung auszuführen.

In der Fig. 2a ist die in Fig. 1 dargestellte Verkehrssituation wiedergegeben, wie sie von der Kamera 4 erfasst wird. Mit anderen Worten zeigt die Fig. 2a die Kamerabilddaten, wie sie vom Umgebungsabschnitt vom Fahrzeug aus aufgenommen werden. Die Objekte 12, 12' befinden sich, wie bereits vermerkt, außerhalb der Reichweite der Sensoren 3a', 3e und liegen somit nicht in den unterschiedlichen Bereichen vor, für die Abstandsdaten ermittelt werden. Die in Fig. 2a dargestellte gestrichelte Linie gibt das durch die Reichweite definierte Ende der unterschiedlichen Bereiche an, von denen Abstandsdaten erfasst werden können. Die Bereiche 6a', 6f sind von links nach rechts in aneinanderfolgenden Winkelabschnitten eingeteilt, so dass die Objekte 12, 12' zwar von der Kamera erfasst werden können, jedoch die zugehörigen Bereiche 6b, 6d/6e aufgrund der beschränkten Reichweite der Sensoren außerhalb der Standorte der Objekte 12, 12' sind. Die Objekte 7, 8 liegen jedoch innerhalb der mit gestrichelter Linie dargestellten Reichweite der Sensoren, so dass diese Objekte innerhalb der unterschiedlichen Bereichen 6c, 6f liegen, für die Abstandsdaten bezogen auf die Objekte 7, 8 erstellt werden können. Für die Bereiche 6c und 6e liegen somit Abschlussinformationen für die Objekte 7, 8 vor, wobei die Objekte 7, 8 ebenso innerhalb der Kamerabilddaten vorhanden sind. Aus der Fig. 2a ist ersichtlich, dass das Objekt 7 in dem Bereich 6e deutlich näher an dem Fahrzeug liegt als das Objekt 6.

Die resultierende erfindungsgemäß verzerrte Darstellung ist in Fig. 2b dargestellt. Es ist zu erkennen, dass für die Objekte 12, 12', welche außerhalb der Bereiche liegen, für die Abstandsdaten erfasst werden, im Wesentlichen keine Verzerrung vorliegt. Zumindest ist die in Fig. 2b dargestellte Verzerrung in der Fluchtlinie zu den Objekten 12, 12' hin im Wesentlichen nicht vorhanden. Für die Objekte 7 und 8 wurden jedoch Abstände erfasst, die zu Verzerrungen führen, welche durch D1 und D2 repräsentiert sind. Durch gezielte Verzerrung, das heißt vertikale Stauchung des vertikalen Bildstreifens, in dem die Objekte 7, 8 vorgesehen sind, werden diese zum unteren Bildrand hin verschoben, um so einen präsenteren Eindruck für den Betrachter vorzusehen. Die Abstände D1 und D2 zeigen die verbleibende Nähe zur unteren Bildkante. Insbesondere zeigt der Verlauf 13 die Stauchung abhängig vom Abstand der Objekte 7, 8, um diese näher zum unteren Bildrand zu ziehen. Es ist zu erkennen, dass aufgrund des geringeren Abstands des Objekts 7 in dem Umgebungsabschnitt der Bildabschnitte des Objekts 7 deutlich näher zum unteren Bildrand hin verzerrt wurde, vgl. Verlauf der Kurve 13 am Objekt 7. In gleicher Weise ist zu erkennen, dass das Objekt 8 zur unteren Bildkante hin durch Verzerrung verschoben wird, jedoch geringfügiger als das Objekt 7. Die Objekte 7, 8 werden jedoch deutlich näher zum unteren Bildrand hin verzerrt im Vergleich zu den Objekten 12, 12', die nahezu nicht zum unteren Bildrand hin verzerrt bzw. verschoben werden.

Insbesondere wird in Fig. 2b dargestellt, dass ein Rand unterhalb der Linie 13 vorgesehen wird, wobei die Linie 13 den Stauchungsgrad angibt. Der Rand unterhalb der Linie 13, die die untere Bildkante des erfassten Kamerabilds darstellt, wird so in das darzustellende Bild eingefügt, das zum einen den verzerrten Bildabschnitt darstellt (oberhalb Linie 13), und das ferner den unteren Rand darstellt (unterhalb der Linie 13), wobei die Höhe des Rands für Bereiche des Rands verringert ist, über denen ein Objekt 7, 8 dargestellt ist, welches in einem geringen Abstand zum Fahrzeug angeordnet ist. Die Abstände D1, D2 zeigen die starken Verjüngungen des Rands für Bereiche des Rands unterhalb entsprechender Bildabschnitte, die ein nahe angeordnetes Objekt 7, 8 aufweisen.

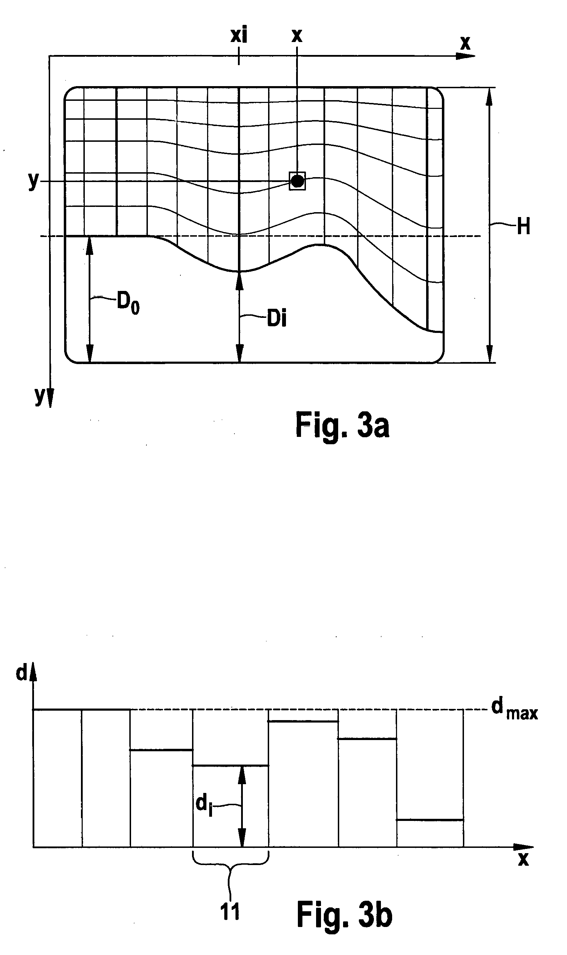

Die Fig. 3a dient zur Verdeutlichung der in Fig. 2b dargestellten verzerrten Bildwiedergabe, und stellt insbesondere den Bildaufbau des anzuzeigenden verzerrten Bilds dar. Die Fig. 3 zeigt einen Bereich für die Wiedergabe von Kamerabilddaten anhand eines verzerrten Gitternetzes, wobei das Gitternetz die Verzerrung gegenüber dem ursprünglich erfassten Kamerabild darstellt. Ein Punkt mit den Koordinaten x, y wird zum einen durch Einfügen eines unteren Rands nach oben verschoben und zum anderen gemäß einem zugehörigen Abstand zusätzlich durch Skalierung verschoben. Für das erfasste und erfindungsgemäße verzerrte Kamerabild einschließlich des Rands ergibt sich eine Höhe H. Die in Fig. 3a dargestellte Verzerrung ist eine vertikale Verzerrung; das in Fig. 3a dargestellte Bild ist das Resultat eines Verfahrens, das keine horizontale Verzerrung vorsieht. Erfindungsgemäß wird für den x-Achsenabschnitt xi wird von den Sensoren ein Abstand erfasst, aus dem eine Verzerrung berechnet wird. Diese Verzerrung führt zu einer Streckung des entsprechenden Abschnitts, so dass sich der Abstand zu einem unteren Bildende auf den Abstand Di verringert. Bei unverzerrter Darstellung ist ein Rand mit der Höhe D₀ vorgesehen, der jedoch gemäß dem erfassten Abstand verringert werden kann. Mit anderen Worten wird an der Stelle in Fig. 3a, an der D₀ aufgetragen ist, mit einem Faktor von 1 (oder einer anderen Konstanten) verzerrt durch Vertikalstauchung (d.h. keine Stauchung bzw. Stauchung mit einem Stauchungs-Grundfaktor) wohingegen an der Stelle xi, ein Objekt in geringem Abstand erfasst wurde, mit einem größeren Faktor gestreckt wird, das heißt mit einem Wert >1 oder mit einem Wert, der größer als die Konstante K ist. K kann insbesondere ½ sein und somit einer Stauchung auf die halbe Bildhöhe entsprechen. Am rechten Bildrand der Fig. 3a ist ersichtlich, dass dort ein Objekt dargestellt ist, welches mit einem geringen Abstand zum Fahrzeug erfasst wurde, so dass der entsprechende Bildabschnitt stark nach unten hin gestreckt wird. Gleichermaßen lässt sich durch Vergleich mit der Stelle Di erkennen, dass die Streckung am rechten Bildrand mit einer größeren Stärke vorgesehen wird als die Streckung an der Stelle di. Die in Fig. 3a vorgesehene Streckung geht vom oberen Bildrand aus und verzerrt den dargestellten Bildabschnitt nach unten gemäß dem erfassten Abstand.

Die Fig. 3b zeigt zugehörige erfasste Abstände für verschiedene Bildabschnitte, die entlang der x-Achse aufgetragen sind. Der Abstand ist als erfasster Abstand d dargestellt, und die maximale Reichweite der Sensoren ist mit dₘₐₓ dargestellt. Der erfasste Abstand dᵢ entspricht dem Bereich 11 des Umgebungsabschnitts, für den Abstandsdaten erfasst wurden. Es sind ferner weitere Bereiche angegeben, für die ein (Minimal- )Abstand aller in diesem Abschnitt erfassten Objekte dargestellt ist. Werden mehrere Objekte in demselben Bereich erfasst, so wird der geringste Abstand als Abstand des Bereichs angesehen.

Gemäß einer weiteren Ausführung der Erfindung wird als Verzerrungsoperation nicht gestreckt, sondern eine horizontale Stauchung durchgeführt. Diese Ausführungsform lässt sich ebenso anhand der Fig. 3a darstellen, wobei jedoch das Gitternetz den mehr oder minder stark gestauchten Bildabschnitt der Kamera darstellt, der den Umgebungsabschnitt wiedergibt. Ausgehend von Kamerabilddaten, die für eine Höhe H ausgelegt sind, werden die Bilddaten zunächst vertikal gestaucht um die Hälfte. Die Stauchung wird jedoch gemäß dem erfassten Abstand verringert, wobei die Verringerung der Stauchung mit abnehmendem Abstand ansteigt. Der Stauchungsfaktor ergibt sich beispielsweise aus einem konstanten Faktor, der die Grundstauchung versieht (beispielsweise in vertikaler Richtung), und einem variablen, von dem erfassten Abstand abhängigen Wert. Der Wert wird berechnet anhand einer Konstanten, die beispielsweise die Maximalreichweite angibt, von der der aktuell für den Bildabschnitt erfassten Abstand angezogen wird. Diese Differenz wird geteilt durch die maximale Reichweite und anschließend mit einem Korrekturfaktor multipliziert. Der Korrekturfaktor wird beispielsweise derart vorgesehen, dass sich eine Gesamtsumme von 1 ergibt, wenn der erfasste Abstand im Wesentlichen 0 ist. Insbesondere kann der konstante Grundfaktor 1,5 sein, und der zu multiplizierende Faktor kann ebenso 1,5 betragen, so dass sich je nach Stärke der Stauchung das Bild entweder nur über die erste Bildhälfte erstreckt (bei einem erfassten Abstand größer als die Reichweite) oder sich über die gesamte Bildhöhe H erstreckt, wenn der Abstand des Objekts im Wesentlichen 0 beträgt.

Die Interpolation der Bildpunkte wird vorzugsweise so vorgesehen, dass Ausgangsbildpunkte der erfassten Kamerabilddaten beispielsweise in ihrem Ähnlichkeitsfaktor erfasst werden, für aufgrund der Stauchung zu vereinigende Bildpunkte der maximale Helligkeitswert erfasst wird und dieser als Helligkeitswert für den entsprechenden Bildpunkt vorgesehen wird. Anstatt des Bildens eines Maximums kann auch ein arithmetisches oder geometrisches Mittel gebildet werden. Eine besonders bevorzugte Ausführungsform sieht vor, dass einzelne Bildabschnitte der gesamten Kamerabilddaten vertikale Streifen sind, die sich unmittelbar aneinander reihen, und die die gesamte Höhe des von den Kamerabilddaten dargestellten Bilds umfassen. Bei der Stauchung oder Streckung, oder im Allgemeinen Verzerrung, wird dann der gesamte Streifen vertikal verzerrt, ohne eine horizontale Verzerrung vorzunehmen. Wie bereits vermerkt und aus den Fig. 2b und 3a ersichtlich, können Randbereiche benachbarter Bildabschnitte in ihrer Verzerrung aneinander fließend angepasst werden. So zeigt beispielsweise die Fig. 3b diskrete, unterschiedliche Abstandswerte für verschiedene Bildabschnitte, die jedoch aufgrund der kontinuierlichen Anpassung an den benachbarten Randbereichen von Bildabschnitten zu einem kontinuierlich verlaufenden Verzerrungsverlauf führen.

Für die Fig. 3a und 3b wurde als Grund-Stauchungsfaktor ein Faktor F gewählt, der zunächst für jeden Bildabschnitt unterschiedlich ist und aufgrund der Anpassung benachbarter Bildabschnitte zu einem kontinuierlichen Streckungsverlauf abhängig von der Position entlang der x-Achse (horizontale Achse) an einen derartigen kontinuierlichen Verlauf angepasst wird. Der Faktor F, der vor der Anpassung benachbarter Bildabschnitte für jeden Bildabschnitt berechnet wird, ergibt sich zu: F = ½ + (½ x (dₘₐₓ-dᵢ) : dₘₐₓ). Hierbei ist F der Ausgangsstauchungsfaktor, dₘₐₓ die maximale Reichweite der Sensoren und dᵢ der Abstand des Objekts, das in dem zugehörigen Bildabschnitt erfasst wurde. Der Term (dₘₐₓ- dᵢ) ist zu verstehen als ein Term, der nur positive Werte annehmen kann oder 0 ist, wobei der Term 0 ist, wenn dᵢ > dₘₐₓ ist. Dies entspricht dem Fall, dass sich das Objekt außerhalb der Reichweite befindet, und somit der Sensor automatisch die maximale Reichweite als Ergebnis angibt. Bis zu einer erfassten Distanz dᵢ, die kleiner als die Reichweite ist, gibt dieser Term die Nähe zum Fahrzeug an, die in die Skalierung mit einfließt. Bei Abständen außerhalb der Reichweite fließt der Abstand selbst nicht mehr in den Stauchungsfaktor ein, sondern es wird ein konstanter Stauchungsfaktor angenommen, der im oben stehenden Fall ½ entspricht.

Üblicherweise besteht ein unmittelbarer Zusammenhang zwischen Sensor, empfindlicher Bereich des Sensors (das heißt Ausrichtung) und dem Bildabschnitt der Kamerabilddaten. Dies wird erreicht, indem die Kamera in fester räumlicher Orientierung zu den verwendeten Sensoren angeordnet ist. Beispielsweise im Fall einer schwenkbaren Kamera umfasst das Verfahren zudem eine Zuordnung des Erfassungsbereichs, indem der Abstand zum Objekt mittels Sensor erfasst wird, und den Bildbereich, der das entsprechende Objekt darstellt. Die Zuordnung kann beispielsweise durch Formerkennung oder durch Bildmatching-Verfahren vorgesehen werden.

## Patentansprüche

1. Verfahren zur kombinierten visuellen Anzeige von Video- und Abstandsdaten einer Verkehrssituation, in der sich ein Fahrzeug (2) befindet, umfassend:
Aufnehmen von Kamerabilddaten eines Umgebungsabschnitts (5) vom Fahrzeug (2) aus;
Erfassen von Entfernungsdaten, die mindestens einen Abstand zwischen dem Fahrzeug (2) und mindestens einem Objekt (7, 8, 12, 12') innerhalb des Umgebungsabschnitts (5) wiedergeben;
Verzerren zumindest eines Bildabschnits der Kamerabilddaten abhängig von dem mindestens einen Abstand (di); und
Anzeigen des verzerrten, zumindest einen Bildabschnitts (10), **dadurch gekennzeichnet, dass** das Verzerren umfasst:
Verschieben, Strecken, Stauchen, Drehen, oder einer Kombination dieser Verzerrungsoperationen, des zumindest einen Bildabschnitts, wobei die Verzerrungsoperation mit einer Stärke ausgeführt wird, die gemäß einer monoton fallenden Funktion von dem Abstand abhängt, wodurch bei einem geringem Abstand die Verzerrungsoperation mit einer größeren Stärke ausgeführt wird als bei einem großen Abstand.

2. Verfahren nach Anspruch 1, wobei das Erfassen von Entfernungsdaten umfasst: Erfassen von Abstandsdaten jeweils für mehrere, unterschiedliche Bereiche (6a-e) des Umgebungsabschnitts mittels an einem Fahrzeugabschnitt des Fahrzeugs (2) aufgereihter Entfernungssensoren (3a-3e); wobei der zumindest eine Bildabschnitt mehreren, unterschiedliche Bildabschnitte umfasst; und wobei das Verzerren umfasst: Verzerren eines der mehreren Bildabschnitte gemäß der Abstandsdaten (di), die ein Objekt (7, 8, 12, 12') betreffen, das in dem Bereich (11) des Umgebungsabschnitts vorliegt, der diesem Bildabschnitt im Wesentlichen entspricht oder sich mit diesem größtenteils überlappt.

3. Verfahren nach Anspruch 2, wobei für mindestens zwei der unterschiedlichen Bereiche des Umgebungsabschnitts jeweils zugehörige Abstandsdaten erfasst (di) werden und mindestens zwei der mehreren Bildabschnitte jeweils gemäß der Abstandsdaten (di) für mindestens ein Objekt 7, 8, 12, 12') verzerrt werden, das in dem jeweiligen Bildabschnitt vorliegt, und der zugehörige Bereich des Umgebungsabschnitt dem jeweiligen Bildabschnitt im Wesentlichen entspricht oder sich mit diesem größtenteils überlappt.

4. Verfahren nach einem der vorangehenden Ansprüche, wobei der Umgebungsabschnitt in sich aneinander anschließende Bildabschnitte entlang der Horizontalen der Kamerabilddaten unterteilt ist, und die Abstandsdatendaten (di) diesen Bildabschnitten jeweils zugeordnet sind, wobei die jeweiligen Bildabschnitte gemäß den jeweils zugeordneten Entfernungsdaten verzerrt werden, und die verzerrte, benachbarte Bildabschnitte nicht aneinander angeglichen werden oder die Verzerrung dieser verzerrten, benachbarten Bildabschnitte zumindest an vertikalen Randbereichen der Bildabschnitte aneinander angeglichen wird, wobei an Schnittstellenbereichen der Bildabschnitte Verzerrungen mit einem kontinuierlichen Verlauf der Stärke der Verzerrung am Übergang zwischen zwei benachbarten Bildabschnitten gesehen wird.

5. Verfahren nach einem der vorangehenden Ansprüche, das ferner umfasst: Ändern der Farbinformation zumindest eines Bildabschnitt der Kamerabilddaten abhängig von dem mindestens einen Abstand, oder Ändern der Farbinformation zumindest eines Objektbereichs des Bildabschnitts der Kamerabilddaten abhängig von dem mindestens einen Abstand, wobei der Objektbereich das Objekt darstellt, dessen Abstand erfasst wird, oder Ändern der Farbinformation zumindest eines Randbereichs, der oberhalb, unterhalb oder neben dem Bildabschnitte liegt, und der keine Kamerabilddaten als eine BilddarsteUung wiedergibt.

6. Verfahren nach einem der vorangehenden Ansprüche, wobei das Verzerren umfasst: Vergrößern eines Bildabschnitts mit abnehmendem Abstand (di) eines Objekts, das innerhalb des Bildabschnitts erfasst wurde, nur in vertikaler Richtung, nur in horizontaler Richtung, oder in horizontaler und vertikaler Richtung der Kamerabilddaten; Verkleinern eines Bildabschnitts, wenn innerhalb des Bildabschnitts kein Objekt erfasst wird oder mit zunehmendem Abstand (di) eines Objekts (7, 8, 12, 12'), das innerhalb des Bildabschnitts erfasst wurde, nur in vertikaler Richtung (y), nur in horizontaler Richtung (x), oder in horizontaler und vertikaler Richtung der Kamerabilddaten.

7. Verfahren nach einem der vorangehenden Ansprüche, wobei das Verzerren umfasst: Vorsehen eines unteren Rands zwischen einer Bildunterkante der Kamerabilddaten und der untersten Kante der visuellen Darstellung, die die Kamerabilddaten und darunterliegend den unteren Rand wiedergibt, wobei der untere Rand eine Höhe (D₀, Dᵢ) aufweist, die mit dem Abstand zunimmt, der für ein Objekt in dem über dem Rand dargestellten Bildabschnitt erfasst wird, und der untere Rand keine Kamerabilddaten als deren Abbildung wiedergibt.

8. Verfahren nach einem der vorangehenden Ansprüche, wobei das Verzerren umfasst: Vorsehen eines unteren Rands zwischen einer Bildunterkante der Kamerabilddaten und der untersten Kante der visuellen Darstellung, die die Kamerabilddaten und den darunterliegenden unteren Rand wiedergibt, wobei der untere Rand eine Farbe aufweist, die sich, gemäß einem vorbestimmten Verlauf, mit dem Abstand ändert, der für ein Objekt in dem über dem Rand dargestellten Bildabschnitt erfasst wird, und der untere Rand diese Farbe und keine Kamerabilddaten als deren Abbildung wiedergibt.

9. Vorrichtung zur kombinierten visuellen Anzeige von Video- und Abstandsdaten zur Ausführung des Verfahrens nach einem der vorangehenden Ansprüche, wobei die Vorrichtung umfasst: einen Bildeingang, der zur Eingabe der Kamerabilddaten in eine mit dem Bildeingang verbundene Bildmanipulationseinheit (1) der Vorrichtung ausgestaltet ist; einen Abstandseingang, der zur Eingabe von Abstandsinformation, die den erfassten Abstand wiedergibt, in die mit dem Abstandseingang verbundene Bildmanipulationseinheit ausgestaltet ist; einen Ausgang, der mit der Bildmanipulationseinheit (1) verbunden ist und zur Ausgabe von Bildanzeigedaten eingerichtet ist, welche den verzerrten Bildabschnitt wiedergeben, wobei die Bildmanipulationseinheit eingerichtet ist, den Schritt des Verzerrens der am Bildeingang eingegebenen Kamerabilddaten auszuführen, in Abhängigkeit von der am Abstandseingang eingegebenen Abstandsinformation, und die ferner eingerichtet ist, den so verzerrten, zumindest einen Bildabschnitt am Ausgang auszugeben.

## Claims

1. Method for the combined visual display of video and distance data for a traffic situation which a vehicle (2) is in, comprising:
recording camera image data for a section of the surroundings (5) from the vehicle (2);
acquiring range data which represent at least one distance between the vehicle (2) and at least one object (7, 8, 12, 12') within the section of the surroundings (5);
distorting at least one image section of the camera image data on the basis of the at least one distance (di); and
displaying the distorted, at least one image section (10), **characterized in that** the distortion comprises:
shifting, stretching, compressing or rotating the at least one image section, or a combination of these distortion operations, wherein the distortion operation is carried out with an intensity which depends on the distance according to a monotonously falling function, as a result of which, in the case of a short distance, the distortion operation is carried out with greater intensity than in the case of a large distance.

2. Method according to Claim 1, wherein the acquisition of range data comprises: respectively acquiring distance data for a plurality of different areas (6a-e) of the section of the surroundings using range sensors (3a-3e) which are lined up on a vehicle section of the vehicle (2); wherein the at least one image section comprises a plurality of different image sections; and wherein the distortion comprises: distorting one of the plurality of image sections according to the distance data (di) relating to an object (7, 8, 12, 12') present in that area (11) of the section of the surroundings which substantially corresponds to this image section or mostly overlaps the latter.

3. Method according to Claim 2, wherein respective associated distance data (di) are acquired for at least two of the different areas of the section of the surroundings, and at least two of the plurality of image sections are respectively distorted according to the distance data (di) for at least one object (7, 8, 12, 12') present in the respective image section, and the associated area of the section of the surroundings substantially corresponds to the respective image section or mostly overlaps the latter.

4. Method according to one of the preceding claims, wherein the section of the surroundings is subdivided into image sections which adjoin one another along the horizontal of the camera image data, and the distance data (di) are respectively associated with these image sections, wherein the respective image sections are distorted according to the respectively associated range data, and the distorted, adjacent image sections are not adjusted to one another, or the distortion of these distorted, adjacent image sections is adjusted at least in vertical border areas of the image sections, wherein, in interface areas of the image sections, distortions with a continuous profile of the distortion intensity are seen at the junction between two adjacent image sections.

5. Method according to one of the preceding claims, which also comprises: changing the colour information for at least one image section of the camera image data on the basis of the at least one distance, or changing the colour information for at least one object area of the image section of the camera image data on the basis of the at least one distance, wherein the object area represents the object whose distance is detected, or changing the colour information for at least one border area which is above, below or beside the image section and does not represent any camera image data as an image representation.

6. Method according to one of the preceding claims, wherein the distortion comprises: increasing the size of an image section with increasing distance (di) of an object, which was detected inside the image section, only in the vertical direction, only in the horizontal direction or in the horizontal and vertical directions of the camera image data; reducing the size of an image section if no object is detected inside the image section or with increasing distance (di) of an object (7, 8, 12, 12'), which was detected inside the image section, only in the vertical direction (y), only in the horizontal direction (x) or in the horizontal and vertical directions of the camera image data.

7. Method according to one of the preceding claims, wherein the distortion comprises: providing a lower border between an image lower edge of the camera image data and the lowermost edge of the visual representation which represents the camera image data and the lower border underneath, wherein the lower border has a height (D₀, Dᵢ) which increases with the distance detected for an object in the image section represented above the border, and the lower border does not represent any camera image data as the depiction thereof.

8. Method according to one of the preceding claims, wherein the distortion comprises: providing a lower border between an image lower edge of the camera image data and the lowermost edge of the visual representation which represents the camera image data and the lower border underneath, wherein the lower border has a colour which changes, according to a predetermined profile, with the distance detected for an object in the image section represented above the border, and the lower border represents this colour and does not represent any camera image data as the depiction thereof.

9. Apparatus for the combined visual display of video and distance data for carrying out the method according to one of the preceding claims, wherein the apparatus comprises: an image input which is configured to input the camera image data to an image manipulation unit (1) of the apparatus, which unit is connected to the image input; a distance input which is configured to input distance information representing the detected distance to the image manipulation unit connected to the distance input; an output which is connected to the image manipulation unit (1) and is set up to output image display data which represent the distorted image section, wherein the image manipulation unit is set up to carry out the step of distorting the camera image data input at the image input on the basis of the distance information input at the distance input and is also set up to output the at least one image section distorted in this manner at the output.

## Revendications

1. Procédé d'affichage visuel combiné de données vidéo et de distance d'une situation de trafic dans laquelle se trouve un véhicule (2), comprenant :
l'acquisition de données d'image de caméra d'une partie (5) de l'environnement du véhicule (2) ;
la détection de données d'éloignement qui représentent au moins une distance entre le véhicule (2) et au moins un objet (7, 8, 12, 12') à l'intérieur de la partie (5) de l'environnement ;
la déformation d'au moins une partie d'image des données d'image de caméra en fonction de l'au moins une distance (di) ; et
l'affichage de l'au moins une partie d'image (10) déformée, **caractérisé en ce que** la déformation comprend :
le décalage, l'étirage, la compression, la rotation, ou une combinaison de ces opérations de déformation de l'au moins une partie d'image, dans lequel l'opération de déformation est effectuée avec une intensité qui dépend de la distance conformément à une fonction monotone décroissante, de telle sorte que pour une faible distance, l'opération de déformation soit effectuée avec une intensité plus élevée que pour une grande distance.

2. Procédé selon la revendication 1, dans lequel la détection de données d'éloignement comprend : la détection de données de distance respectives pour une pluralité de zones différentes (6a-e) de la partie de l'environnement au moyen de capteurs d'éloignement (3a-3e) alignés sur une partie de véhicule du véhicule (2) ; dans lequel l'au moins une partie d'image comprend une pluralité de parties d'image différentes ; et dans lequel la déformation comprend : la déformation de l'une de la pluralité de parties d'image conformément aux données de distance (di) qui concernent un objet (7, 8, 12, 12') présent dans la zone (11) de la partie de l'environnement qui correspond sensiblement à cette partie d'image ou qui se superpose en majeure partie à celle-ci.

3. Procédé selon la revendication 2, dans lequel, pour au moins deux des différentes zones de la partie de l'environnement, des données de distance respectivement associées sont détectées (di) et au moins deux de la pluralité de parties d'image sont respectivement déformées conformément aux données de distance (di) pour au moins un objet (7, 8, 12, 12') qui est présent dans la partie d'image respective, et la zone associée de la partie de l'environnement correspond sensiblement à la partie d'image respective ou se superpose en majeure partie à celle-ci.

4. Procédé selon l'une quelconque des revendications précédentes, dans lequel la partie de l'environnement est subdivisée en des parties d'image se suivant mutuellement le long de l'horizontale des données d'image de caméra, et les données de distance (di) sont respectivement associées à ces parties d'image, dans lequel les parties d'image respectives sont déformées conformément aux données d'éloignement respectivement associées, et les parties d'image adjacentes déformées ne sont pas alignées les unes par rapport aux autres ou la déformation de ces parties d'image adjacentes déformées est au moins alignée au niveau de zones de bord verticales des parties d'image, dans lequel, au niveau de zones d'interface des parties d'image, on remarque des déformations présentant une évolution continue de l'intensité de la déformation à la transition entre deux parties d'image adjacentes.

5. Procédé selon l'une quelconque des revendications précédentes, comprenant en outre : une modification une information de couleur d'au moins une partie d'image des données d'image de caméra en fonction de l'au moins une distance, ou une modification une information de couleur d'au moins une zone d'objet de la partie d'image des données d'image de caméra en fonction de l'au moins une distance, dans lequel la zone d'objet représente l'objet dont la distance est détectée, ou une modification une information de couleur d'au moins une zone de bord qui se situe au-dessus, en dessous ou à côté de la partie d'image, et ne représentant pas de données d'image de caméra en tant que présentation d'image.

6. Procédé selon l'une quelconque des revendications précédentes, dans lequel la déformation comprend : un grossissement d'une partie d'image présentant une distance décroissante (di) d'un objet ayant été détecté à l'intérieur de la partie d'image, uniquement en direction verticale, uniquement en direction horizontale, ou dans les directions horizontale et verticale des données d'image de caméra ; une réduction d'une partie d'image lorsqu'aucun objet n'est détecté à l'intérieur de la partie d'image ou lors d'une augmentation de la distance (di) d'un objet (7, 8, 12, 12') ayant été détecté à l'intérieur de la partie d'image, uniquement en direction verticale (y), uniquement en directions horizontale (x), ou dans les direction horizontale et verticale des données d'image de caméra.

7. Procédé selon l'une quelconque des revendications précédentes, dans lequel la déformation comprend : l'établissement d'un bord inférieur entre une bordure inférieure d'image des données d'image de caméra et la bordure la plus basse de la représentation visuelle qui représente les données d'image de caméra et le bord inférieur situé en dessous de celles-ci, dans lequel le bord inférieur présente une hauteur (D₀, Dᵢ) qui augmente avec la distance détectée pour un objet se situant dans la partie d'image représentée à travers le bord, et le bord inférieur ne représente aucune donnée d'image de caméra pour sa formation d'image.

8. Procédé selon l'une quelconque des revendications précédentes, dans lequel la déformation comprend : l'établissement d'un bord inférieur entre une bordure inférieure d'image des données d'image de caméra et la bordure la plus basse de la représentation visuelle qui représente les données d'image de caméra et le bord inférieur situé en dessous de celles-ci, dans lequel le bord inférieur présente une couleur qui varie conformément à une évolution prédéterminée avec la distance détectée pour un objet dans la partie d'image représentée à travers le bord, et le bord inférieur représente cette couleur et ne représente aucune donnée d'image de caméra pour sa formation d'image.

9. Dispositif d'affichage visuel combiné de données vidéo et de distance destiné à mettre en oeuvre le procédé selon l'une quelconque des revendications précédentes, dans lequel le dispositif comprend : une entrée d'image qui est destinée à la fourniture en entrée des données d'image de caméra dans une unité de manipulation d'image (1) connectée à l'entrée d'image du dispositif ; une entrée de distance qui est destinée à la fourniture en entrée d'une information de distance qui représente la distance détectée, dans l'unité de manipulation d'image connectée à l'entrée de distance ; une sortie qui est connectée à l'unité de manipulation d'image (1) et est conçue pour fournir en sortie des données d'affichage d'image qui représentent la partie d'image déformée, dans lequel l'unité de manipulation d'image est conçue pour exécuter l'étape de déformation des données d'image de caméra fournies en entrée à l'entrée d'image en fonction de l'information de distance fournie en entrée à l'entrée de distance, et est en outre conçue pour fournir en sortie l'au moins une partie d'image ainsi déformée.
